(19) Europäisches Patentamt | European Patent Office | Office européen des brevets

(11) **EP 3 087 132 B1**

(12) **EUROPEAN PATENT SPECIFICATION**

(45) Date of publication and mention
of the grant of the patent:
**22.04.2020 Bulletin 2020/17**

(21) Application number: **13900294.3**

(22) Date of filing: **24.12.2013**

(51) Int Cl.:
**C08L 23/08** *(2006.01)*     **C08L 23/10** *(2006.01)*
**C08L 23/12** *(2006.01)*     **C08L 23/14** *(2006.01)*

(86) International application number:
**PCT/CN2013/001630**

(87) International publication number:
**WO 2015/095985 (02.07.2015 Gazette 2015/26)**

(54) **SUPERIOR IMPACT STRENGTH AT LOW TEMPERATURE BY RUBBER DESIGN**

KONZEPTION EINER HOHEN SCHLAGFESTIGKEIT BEI NIEDRIGER TEMPERATUR DURCH
KAUTSCHUK

RÉSISTANCE SUPÉRIEURE AUX CHOCS À BASSE TEMPÉRATURE RÉSULTANT DE LA
CONCEPTION DU CAOUTCHOUC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.11.2016 Bulletin 2016/44**

(73) Proprietors:
• **ABU DHABI POLYMERS CO. LTD (BOROUGE)
LLC**
**Abu Dhabi (AE)**
• **Borealis AG**
**1220 Vienna (AT)**

(72) Inventors:
• **CHEN, Rick**
**Shanghai 200040 (CN)**
• **LAMPELA, Janne**
**Abu Dhabi (AE)**

(74) Representative: **Maiwald Patent- und
Rechtsanwaltsgesellschaft mbH
Elisenhof
Elisenstraße 3
80335 München (DE)**

(56) References cited:
EP-A1- 2 022 824     EP-A1- 2 338 656
EP-A1- 2 338 657     EP-A1- 2 471 857
WO-A1-2010/142540     WO-A1-2010/142540

EP 3 087 132 B1

**Description**

The present invention relates to a new polypropylene composition comprising a heterophasic propylene copolymer with multimodal comonomer distribution in the rubber phase, its manufacture as well as to its use in injection-molded articles.

Propylene copolymers can be used for many applications. For instance propylene copolymers are used in the area of juvenile care (car seat, stroller, baby walker), toys and heavy duty pails where impact resistance not only at room temperature but also at lower temperature plays an important role. Also the processability as well as stiffness of such propylene copolymers plays an important issue. Unfortunately these desired proerties behave in a contradicting manner, i.e. the improvement of one property is paid with deterioration of the other properties.

Thus the object of the present invention is to provide a polymer material for injection molding, which has highly advantageous mechanical properties and additionally highly desirable processing properties for producing injection-molded articles.

The finding of the present invention is that the objects can be solved by a propylene composition having a rather high melt flow rate, wherein said propylene copolymer has a multimodal comonomer distribution in the rubber phase.

Therefore, the present invention provides a polypropylene composition comprising, preferably consisting of,

(a) at least 70 wt.-%, based on the total weight of the polypropylene composition of a heterophasic propylene copolymer (HECO) comprising

- a matrix (M) being a polypropylene (PP) and
- an elastomeric ethylene-propylene copolymer (EC) dispersed in said matrix (M), said elastomeric ethylene-propylene copolymer (EC) comprises

  • a first elastomeric ethylene-propylene copolymer fraction (EC1) and
  • a second elastomeric ethylene-propylene copolymer fraction (EC2),

wherein the elastomeric ethylene-propylene copolymer (EC) is the xylene cold soluble fraction (XCS) of the heterophasic propylene copolymer (HECO),
wherein further

(a1) said heterophasic propylene copolymer (HECO) has a melt flow rate $MFR_2$ (230 °C) measured according to ISO 1133 in the range of 3.0 to 9.0 g/10min,
(a2) the elastomeric ethylene-propylene copolymer (EC) has an intrinsic viscosity (IV) measured according to ISO 1628-1 (at 135 °C in decaline) in the range of 2.80 to 4.80 dl/g and a comonomer content in the range of 38.0 to 58.0 mol.-%, wherein still further
(a3) the heterophasic propylene copolymer (HECO) fulfills the inequation (I)

$$\frac{C(EC1)}{C(EC)} < 1.0 \qquad (I)$$

wherein

C(EC1) is the ethylene content [in mol.-%] of the first elastomeric ethylene-propylene copolymer fraction (EC1); and
C(EC) is the ethylene content [in mol.-%] of the elastomeric ethylene-propylene copolymer (EC);

(b) at least 1ppm of a nucleating agent, preferably a polymeric nucleating agent;
(c) 0.5 to 2.0 wt.-%, based on the total weight of the polypropylene composition, of an inorganic filler; and
(d) 0.02 to 5.0 wt.-%, based on the total weight of the polypropylene composition, of further additives different to the inorganic filler and the nucleating agent and the elastomeric ethylene-propylene copolymer (EC) is the only xylene cold soluble fraction (XCS) present in the polypropylene composition.

Accordingly, the heterophasic propylene copolymer (HECO) of the invention is multimodal, preferably bimodal, with respect of the comonomer distribution of the dispersed phase (of the elastomeric ethylene-propylene copolymer (EC)). The comonomer content of each of the first elastomeric ethylene-propylene copolymer fraction (EC 1) and the second elastomeric ethylene-propylene copolymer fraction (EC2) can be measured or the first elastomeric ethylene-propylene copolymer fraction (EC1) and the mixture of first elastomeric ethylene-propylene copolymer fraction (EC1) and second elastomeric ethylene-propylene copolymer fraction (EC2) can be measured and the second ethylene-propylene copolymer fraction (EC2) calculated. The calculation of the comonomer content is given below under 'Examples".

In the present invention the terms "elastomeric ethylene-propylene copolymer (EC)", "xylene cold soluble (XCS) fraction of the heterophasic propylene copolymer", "dispersed phase" and "ethylene-propylene rubber" denote the same, i.e. are interchangeable.

The polypropylene composition comprises at least 70 wt.% of the heterophasic propylene copolymer (HECO), more preferably at least 85 wt.% of the heterophasic propylene copolymer (HECO), still more preferably at least 90 wt.% of the heterophasic propylene copolymer (HECO) and most preferably at least 95 wt.% of the heterophasic propylene copolymer (HECO).

The polypropylene composition can comprise other polymer component(s) in addition to heterophasic propylene copolymer (HECO). In an especially preferred embodiment the heterophasic propylene copolymer (HECO) is the only polymer component present in the polypropylene composition. Herein it is understood that the nucleating agent, the inorganic filler and the other additives may be added to the polypropylene composition in form of a masterbatch containing a carrier polymer. However, the optional carrier polymer(s) of any masterbatche(s) of the nucleating agent, of the inorganic filler or, respectively, of the further additive(s) are calculated to the total amount (as defined above or below) of said nucleating agent, of said inorganic filler or, respectively, of said further additive(s) present in the polypropylene composition.

The polypropylene composition preferably has

- a melting temperature Tm between 162 and 170°C, more preferably between 164 to 168 °C, determined according to differential scanning calorimetry (DSC) according to ISO 11357 / part 3 /method C2;
  and/or, preferably and
- a crystallisation temperature Tc between 128 and 135°C, more preferably between 129 to 133 °C, determined according to differential scanning calorimetry (DSC) according to ISO 11357 / part 3 /method C2.

The heterophasic propylene copolymer (HECO) of the polypropylene composition according to this invention is nucleated with the nucleating agent (b) (referred herein below also as "nucleating agent").

Preferably the nucleation of the heterophasic propylene copolymer (HECO) is accomplished by use of a polymeric nucleating agent. Thus, preferably, the nucleating agent is a polymeric nucleating agent. Still more preferably the polymeric nucleating agent is an alpha-nucleating agent, more preferably a polymeric alpha-nucleating agent, e.g. a vinylcycloalkane polymer and/or a vinylalkane polymer.

Said polymeric nucleating agent maybe introduced into the composition by blending or during polymerization of the heterophasic propylene copolymer (HECO), preferably, the polymeric nucleating agent is introduced into the composition by prepolymerising the catalyst used to prepare a part or all of the heterophasic propylene copolymer (HECO).

Preferably, the heterophasic propylene copolymer (HECO) consists of

- the matrix (M) being a polypropylene (PP)
- the elastomeric ethylene-propylene copolymer (EC) dispersed in said matrix (M); and
- the nucleating agent (b), preferably the polymeric nucleating agent, as defined in more detail below.

Preferably the final melt flow rate of the heterophasic propylene copolymer (HECO) is adjusted during the polymerization process. Accordingly the reactor-made heterophasic propylene copolymer (HECO) has the melt flow rate as defined above or below or in the claims. "Reactor-made heterophasic propylene copolymer (HECO)" denotes herein that the melt flow rate of the heterophasic propylene copolymer (HECO) has not been modified on purpose by post-treatment. Accordingly, in the preferred embodiment the heterophasic propylene copolymer (HECO) is non-visbroken, particularly not visbroken using peroxide. Accordingly, the melt flow rate is not increased by shortening the chain length of the heterophasic propylene copolymer (HECO) comprised in the polypropylene composition according to this invention by use of peroxide. Thus it is preferred that the heterophasic propylene copolymer (HECO) (and thus also the polypropylene composition) does not contain any peroxide and/or decomposition product thereof.

It has surprisingly been found that the combination of the melt flow rate, multimodality, like bimodality, with respect to comonomer distribution of the dispersed phase and the presence of the nucleating agent provide a polypropylene composition with surprisingly high impact properties (as expressed by Charpy notched impact strength) without sacrificing the stiffness thereof. Moreover the property combination provide advantageous processing properties making the polypropylene composition highly desirable for processing the polypropylene composition into injection-molded articles, namely excellent flowability and surprisingly high crystallization temperature which properties improve markedly the cycle time of the injection-molded articles in the injection-molding process.

Preferably the polypropylene composition and/or the heterophasic propylene copolymer (HECO), preferably both, has/have a melt flow rate MFR$_2$ (230 °C) measured according to ISO 1133 in the range of 3.5 to 8.0 g/10 min, more preferably in the range of 4.0 to 8.0 g/10 min.

The heterophasic propylene copolymer (HECO) according to this invention comprises apart from propylene also comonomers. Preferably the propylene copolymer comprises apart from propylene ethylene and/or C$_4$ to C$_{12}$ alpha-olefins. Accordingly the term "propylene copolymer" according to this invention is understood as a polypropylene comprising, preferably consisting of, units derivable from

(a) propylene
and
(b) ethylene and/or C$_4$ to C$_{12}$ alpha-olefins, preferably ethylene.

Thus the heterophasic propylene copolymer (HECO) according to this invention comprises monomers copolymerizable with propylene, for example comonomers such as ethylene and/or C$_4$ to C$_{12}$ alpha-olefins, in particular ethylene and/or C$_4$ to C$_8$ alpha-olefins, e.g. 1-butene and/or 1-hexene. Preferably the heterophasic propylene copolymer (HECO) according to this invention comprises, especially consists of, monomers copolymerizable with propylene from the group consisting of ethylene, 1-butene and 1-hexene. More specifically the propylene copolymer of this invention comprises - apart from propylene - units derivable from ethylene and/or 1-butene. In one specific embodiment the heterophasic propylene copolymer (HECO) according to this invention comprises - apart from propylene - units derivable from ethylene only.

Per definition the xylene cold soluble (XCS) fraction of the heterophasic propylene copolymer (HECO) according to this invention is regarded as the elastomeric ethylene-propylene copolymer (EC). Accordingly wherever in the application reference is made to the ethylene content and/or the intrinsic viscosity of the elastomeric ethylene-propylene copolymer (EC) the ethylene content and the intrinsic viscosity, respectively, of the xylene cold soluble (XCS) fraction of the heterophasic propylene copolymer (HECO) is meant.

As already outlined above, the first elastomeric ethylene-propylene copolymer fraction (EC1) and the second elastomeric ethylene-propylene copolymer fraction (EC2) comprised in the elastomeric ethylene-propylene copolymer (EC) comprise ethylene comonomers, preferably, in the first elastomeric ethylene-propylene copolymer fraction (EC1) and the second elastomeric ethylene-propylene copolymer fraction (EC2) ethylene is the only comonomer, more preferably, ethylene is the only comonomer in the elastomeric ethylene-propylene copolymer (EC).

It is especially preferred that the elastomeric ethylene-propylene copolymer (EC) consists of the first elastomeric ethylene-propylene copolymer fraction (EC1) and the second elastomeric ethylene-propylene copolymer fraction (EC2), wherein further the first elastomeric ethylene-propylene copolymer fraction (EC1) and the second elastomeric ethylene-propylene copolymer fraction (EC2) consists of propylene and ethylene only.

The matrix (M) being a polypropylene (PP) preferably consists of propylene and, optionally, monomer units such as ethylene and/or C$_4$ to C$_{12}$ alpha-olefins, more preferably ethylene monomer units, still more preferably the matrix (M) being a polypropylene (PP) is a propylene homopolymer. The matrix (M) is referred herein as polypropylene (PP). Thus, in one preferred embodiment the matrix (M) is a propylene homopolymer (H-PP).

The polypropylene (PP), like the propylene homopolymer (H-PP), may be produced in different reactors and thus it may comprise at least two fractions, more preferably consists of two fractions, e.g. a first polypropylene fraction (PP1), preferably said first polypropylene fraction (PP1) is a first propylene homopolymer fraction (H-PP1), and a second polypropylene fraction (PP2), preferably said second polypropylene fraction (PP2) is a second propylene homopolymer fraction (H-PP2). In one preferred embodiment said two fractions have the same comonomer content and the same melt flow rate MFR$_2$ (230 °C).

Additionally it is appreciated that the heterophasic propylene copolymer (HECO) preferably has comonomer content in a very specific range. Thus it is required that the comonomer content, preferably ethylene content, of the propylene copolymer is in the range of 15.0 to 25.0 mol.-%, preferably in the range of 16.0 to 23.0 mol.-% and most preferably in the range of 17.0 to 22.0 mol.-%.

As mentioned above, the heterophasic propylene copolymer (HECO) according to the present invention is multimodal, preferably bimodal, with regard to the ethylene content of the elastomeric ethylene-propylene copolymer (EC), due to the presence of the elastomeric ethylene-propylene copolymer fractions (EC1) and (EC2) which contain different amounts of ethylene. Even more preferred the elastomeric ethylene-propylene copolymer (EC) is bimodal in view of the ethylene content. Thus, preferably, the elastomeric ethylene-propylene copolymer (EC) of the heterophasic propylene copolymer (HECO) consists of the elastomeric ethylene-propylene copolymer fractions (EC1) and (EC2). The elastomeric ethylene-propylene copolymer (EC) is the only xylene cold soluble fraction (XCS) present in the polypropylene composition. Thus, the xylene soluble fraction of the polypropylene composition and of the heterophasic propylene copolymer (HECO) are the same.

Accordingly it is preferred that the total ethylene content of the elastomeric ethylene-propylene copolymer (EC) differs from the ethylene content of the first elastomeric ethylene-propylene copolymer fraction (EC1). Even more preferably the total ethylene content [in mol.-%] of the ethylene-propylene copolymer (EC) is higher than the ethylene content [in mol.-%] of the first elastomeric ethylene-propylene copolymer fraction (EC1). Therefore the heterophasic propylene copolymer (HECO) fulfills the inequation (I)

$$\frac{C(EC1)}{C(EC)} < 1.0 \quad (I)$$

wherein

C(EC1) is the ethylene content [in mol.-%] of the first elastomeric ethylene-propylene copolymer fraction (EC1); and
C(EC) is the ethylene content [in mol.-%] of the elastomeric ethylene-propylene copolymer (EC)

The ethylene content of the first elastomeric ethylene-propylene copolymer fraction (EC1) can be easily determined during manufacturing. In case of a mechanical blend simply the properties of the polymer forming the first elastomeric ethylene-propylene copolymer (EC1) in the composition is determined. In case of a reactor blend, i.e. wherein the individual fractions (which may include the matrix) are prepared in consecutive reactors the properties of the polymer obtained after producing the first elastomeric ethylene-propylene copolymer fraction (EC1) are determined. This can be easily achieved by separating a part of the polymer for making analysis prior to feeding to a subsequent stage. Per definition, in case of reactor blend, the first elastomeric ethylene-propylene copolymer fraction (EC1) is the xylene cold soluble fraction (XCS) after having produced the matrix and the first elastomeric fraction of the heterophasic propylene copolymer (HECO). Accordingly the xylene cold soluble fraction (XCS) of the mixture of the matrix and the first elastomeric fraction is regarded as the first elastomeric ethylene-propylene copolymer fraction (EC1). Therefore the properties, e.g. the ethylene content and intrinsic viscosity, of the xylene cold soluble (XCS) fraction of the mixture of the matrix (M) and the first elastomeric fraction of the heterophasic propylene copolymer (HECO) are to be regarded as the properties of the first elastomeric ethylene-propylene copolymer fraction (EC1).

The above equally applies to the second elastomeric ethylene-propylene copolymer (EC2). Accordingly in case of a mechanical blend simply the properties of the polymer forming the second elastomeric ethylene-propylene copolymer (EC2) in the composition are determined. In case of a reactor blend the properties of the polymer obtained prior and after producing the second elastomeric ethylene-propylene copolymer fraction (EC2) are determined and the properties, like ethylene content or intrinsic viscosity, are calculated. To be more precise the properties, e.g. the ethylene content and intrinsic viscosity, of the xylene cold soluble (XCS) fraction of the polymer mixture obtained prior and after producing the second elastomeric ethylene-propylene copolymer fraction (EC2) are determined and subsequently the properties, like the ethylene content and intrinsic viscosity, of the second elastomeric ethylene-propylene copolymer fraction (EC2) are calculated.

The calculation of the comonomer content and the calculation of intrinsic viscosity are given below under 'Examples".

Preferably, the first elastomeric ethylene-propylene copolymer fraction (EC1) has a comonomer content in the range of 30.0 to 50.0 mol.-%, more preferably, in the range of 35.0 to 48.0 mol.-% and most preferably in the range of 37.0 to 45.0 mol.-%.

The second elastomeric ethylene-propylene copolymer fraction (EC2) preferably has a comonomer content in the range of 42.0 to 60.0 mol.-%, more preferably in the range of 47.0 to 60.0 mol.-% and most preferably within the range of 50.0 to 58.0 mol.-%.

The elastomeric ethylene-propylene copolymer (EC) preferably has a comonomer content in the range in the range of 38.0 to 58.0 mol.-%, more preferably in the range of 42.0 to 50.0 mol.-% and most preferably in the range of 45.0 to 50.0 mol.-%.

As already outlined above, it is preferred that the total ethylene content of the elastomeric ethylene-propylene copolymer (EC) differs from the ethylene content of the first elastomeric ethylene-propylene copolymer fraction (EC1). Thus, usually and preferably, the ethylene content of the first elastomeric ethylene-propylene copolymer fraction (EC1) is different from the ethylene content of the second elastomeric ethylene-propylene copolymer fraction (EC2), particularly in case the elastomeric ethylene-propylene copolymer (EC) consists of the elastomeric ethylene-propylene copolymer fractions (EC1) and (EC2).

Preferably, the following inequation Ia, more preferably inequation Ib, yet more preferably the inequation (Ic), is fulfilled

$$\frac{C(EC1)}{C(EC)} < 0.90 \quad (Ia)$$

$$\frac{C(EC1)}{C(EC)} < 0.85 \quad \text{(Ib)}$$

$$0.50 < \frac{C(EC1)}{C(EC)} < 0.85 \quad \text{(Ic)}$$

wherein

C(EC1) is the ethylene content [in mol.-%] of the first elastomeric ethylene-propylene copolymer fraction (EC1); and
C(EC) is the ethylene content [in mol.-%] of the elastomeric ethylene-propylene copolymer (EC).

In another preferred embodiment the total ethylene content [in mol.-%] of the second elastomeric ethylene-propylene copolymer fraction (EC2) is higher than the ethylene content [in mol.-%] of the first elastomeric ethylene-propylene copolymer fraction (EC1). Thus it is preferred that the propylene copolymer fulfills inequation (II), more preferably inequation (IIa), still more preferably inequation (IIb), yet more preferably inequation (IIc),

$$C(EC2) - C(EC1) \geq 4.0 \, mol. -\% \quad \text{(II)}$$

$$25.0 \, mol. -\% \geq C(EC2) - C(EC1) \geq 4.0 \, mol. -\% \quad \text{(IIa)}$$

$$20.0 \, mol. -\% \geq C(EC2) - C(EC1) \geq 7.0 \, mol. -\% \quad \text{(IIb)}$$

$$18.0 \, mol. -\% \geq C(EC2) - C(EC1) \geq 10.0 \, mol. -\% \quad \text{(IIc)}$$

wherein

C(EC1) is the ethylene content [in mol.-%] of the first elastomeric ethylene-propylene copolymer fraction (EC1); and
C(EC2) is the ethylene content [in mol.-%] of the second elastomeric ethylene-propylene copolymer fraction (EC2).

In a particularly preferred embodiment the elastomeric ethylene-propylene copolymer (EC) is the only xylene cold soluble fraction (XCS) present in the polypropylene composition and consists of the elastomeric ethylene-propylene copolymer fractions (EC1) and (EC2) whereby the first elastomeric ethylene-propylene copolymer fraction (EC1) preferably has a comonomer content in the range of 37.5 to 42.5 mol.-% and the second elastomeric ethylene-propylene copolymer fraction (EC2) has a comonomer content in the range of 50.0 to 58.0 mol.-%.
Preferably, the heterophasic propylene copolymer (HECO) fulfills the inequation (III)

$$\frac{IV(EC)}{IV(EC1)} < 1.00 \quad \text{(III)}$$

wherein

IV(EC1) is the intrinsic viscosity (IV) measured according to ISO 1628-1 (at 135 °C in decaline) [in dl/g] of the first elastomeric ethylene-propylene copolymer fraction (EC1); and
IV(EC) is the intrinsic viscosity (IV) measured according to ISO 1628-1 (at 135 °C in decaline) [in dl/g] of the elastomeric ethylene-propylene copolymer (EC).

As already outlined above with regard to the ethylene content, also the intrinsic viscosities of the individual fraction can be easily determined during manufacturing. Reference is made to the information provided when defining the elastomeric ethylene-propylene copolymer (EC), the first elastomeric ethylene-propylene copolymer (EC1) and the second elastomeric ethylene-propylene copolymer (EC2).

Preferably, the first elastomeric ethylene-propylene copolymer fraction (EC1) has an intrinsic viscosity (IV) measured according to ISO 1628-1 (at 135 °C in decaline) of 3.00 to 5.00 dl/g, more preferably of 3.00 to 4.70 dl/g still more preferably of 3.00 to 4.50 dl/g and yet more preferably 3.80 to 4.40 dl/g.

The second elastomeric ethylene-propylene copolymer fraction (EC2) preferably has an intrinsic viscosity (IV) measured according to ISO 1628-1 (at 135 °C in decaline) of 2.80 to 4.80 dl/g, more preferably of 3.40 to 4.40 dl/g and most preferably of 3.60 to 4.20 dl/g.

The elastomeric ethylene-propylene copolymer (EC) preferably has an intrinsic viscosity (IV) measured according to ISO 1628-1 (at 135 °C in decaline) of 2.70 to 4.70 dl/g, more preferably of 3.00 to 4.70 dl/g and most preferably of 3.60 to 4.20 dl/g.

Preferably, in the heterophasic propylene copolymer (HECO)

(a) the weight ratio of the polypropylene (PP) to the elastomeric ethylene-propylene copolymer (EC) [(PP)/(EC)] is in the range of 85/15 to 60/40, more preferably in the range of 80/20 to 70/30; and/or, preferably and,

(b) the weight ratio of the first elastomeric ethylene-propylene copolymer fraction (EC1) to the second elastomeric ethylene-propylene copolymer fraction (EC2) [(EC1)/(EC2)] is in the range of 70/30 to 30/70 more preferably in the range of 70/30 to 50/50.

Preferably, in the heterophasic propylene copolymer (HECO) the polypropylene (PP)

(a) is a propylene homopolymer (H-PP);
and/or, preferably and
(b) has a melt flow rate $MFR_2$ (230 °C) measured according to ISO 1133 in the range of 15.0 to 35.0 g/10min, more preferably in the range of 18.0 to 35.0 g/10 min, even more preferably in the range of 18.0 to 33.0 g/10 min.

The expression propylene homopolymer used in the instant invention relates to a polypropylene that consists substantially, i.e. of more than 99.7 wt.-%, still more preferably of at least 99.8 wt.-%, of propylene units. In a preferred embodiment only propylene units in the propylene homopolymer are detectable. The comonomer content can be determined with $^{13}$C NMR spectroscopy, as described below in the examples.

The polypropylene composition comprises

(a) at least 70 wt.-%, based on the total weight of the polypropylene composition, of the heterophasic propylene copolymer (HECO);
(b) at least 1 ppm of the nucleating agent, preferably at least 1 ppm of the polymeric nucleating agent;
(c) 0.5 to 2.0 wt.-%, based on the total weight of the polypropylene composition, of the inorganic filler; and
(d) 0.02 to 5.0 wt.-%, based on the total weight of the polypropylene composition, of further additives different to the inorganic filler and the nucleating agent .

The inorganic filler is preferably present in an amount of 0.7 to 1.5 wt.-%, more preferably in an amount of 0.8 to 1.3 wt.-% and most preferably in an amount of 0.9 to 1.2 wt.-% based on the polypropylene composition.

The inorganic filler is preferably selected from is mica, wollastonite, kaolinite, smectite, calcium carbonate, montmorillonite, talc, phyllosilicate or a mixture thereof. The most preferred inorganic filler is talc.

For the purpose of the present invention the compounds mentioned above, i.e. the inorganic filler and the additives different to the inorganic filler, are not considered as nucleating agents.

The polypropylene composition preferably has

(a) a Charpy notched impact strength (NIS) measured according to ISO 179 1eA at +23 °C in the range of 40 to 70 kJ/m$^2$, more preferably 43 to 65 kJ/m$^2$, still more preferably 45 to 65 kJ/m$^2$, more preferably 50 to 65 kJ/m$^2$, most preferably 52 to 62 kJ/m$^2$,
and/or, preferably and
(b) a Charpy notched impact strength (NIS) was measured according to ISO 179 1eA at - 20 °C of at least 6.0 kJ/m$^2$, more preferably from 7.0 kJ/m$^2$ to 15 kJ/m$^2$,still more preferably from 7.0 kJ/m$^2$ to 15 kJ/m$^2$ and most preferably from 8.0 kJ/m$^2$ to 15 kJ/m$^2$,
and/or, preferably and
(c) a tensile modulus measured at 23 °C according to ISO 527-1 (cross head speed 1 mm/min) of at least 950 MPa. Usually the tensile modulus will not be higher than 2,000 MPa. Preferably, the tensile modulus measured at 23 °C according to ISO 527-1 (cross head speed 1 mm/min) of is within the range of 970 to 1,300 MPa, more preferably within the range of 990 to 1,250 MPa.

In addition to the nucleating agent, which is preferably a polymeric nucleating agent, more preferably an alpha-nucleating agent, and the inorganic filler the polypropylene composition as defined in the instant invention contains, up to 5.0 wt.-% additives (different to the inorganic filler and the nucleating agent), like antioxidants, acid scavangers, UV stabilisers, as well as processing aids, such as slip agents and antiblocking agents. Preferably the additive content (without nucleating agents and inorganic filler) is below 3.0 wt.-%, like below 1.0 wt.-% based on the polypropylene composition.The additive(s) is/are present in an amount of at least 0.02 wt.% based on the polypropylene composition.

The polypropylene composition preferably comprises a polymeric nucleating agent, more preferably an alpha-nucleating agent. Even more preferred the present polypropylene composition is free of beta-nucleating agents. The alpha-nucleating agentis preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer (as discussed in more detail below), and
(v) mixtures thereof.

Such additives are generally commercially available and are described, for example, in "Plastic Additives Handbook", 5th edition, 2001 of Hans Zweifel.

As mentioned earlier the nucleating agent is preferably a polymeric nucleating agent, more preferably an alpha-nucleating agent, e.g. a polymeric alpha-nucleating agent.

The (alpha)-nucleating agent content of the polypropylene composition is preferably up to 5.0 wt.-%. In a preferred embodiment, the polypropylene composition contains not more than 3000 ppm, more preferably of 1 to 2000 ppm of an (alpha)-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

In a preferred embodiment the polypropylene composition contains a vinylcycloalkane, like vinylcyclohexane (VCH), polymer and/or vinylalkane polymer, as the preferable alpha-nucleating agent. Preferably in this embodiment the polypropylene composition contains a vinylcycloalkane, like vinylcyclohexane (VCH), polymer and/or vinylalkane polymer, preferably vinylcyclohexane (VCH).

The nucleating agent can be introduced as a masterbatch. Some alpha-nucleating agents, i.e. the as defined in the present invention, can be also introduced by BNT-technology as described below.

The (alpha-)nucleating agent may be introduced to the polypropylene composition e.g. during the polymerization process of the heterophasic propylene copolymer (HECO) or may be incorporated to the polypropylene composition in the form of masterbatch (MB) together with e.g. a carrier polymer.

In case the nucleating agent is incorporated to the polypropylene composition in the form of masterbatch (MB) said nucleating agent is preferably a polymeric nucleating agent, which is more preferably alpha-nucleating agent, most preferably a vinylcycloalkane, like vinylcyclohexane (VCH), polymer and/or vinylalkane polymer, preferably vinylcyclohexane (VCH), as defined above or below and is preferably present in an amount of not more than 500 ppm, more preferably of 1 to 200 ppm, and still more preferably of 5 to 100 ppm, based on the weight of the master batch (100 wt.%). In this embodiment, more preferably, said master batch is present in an amount of not more than 10.0 wt.%, more preferably not more than 5.0 wt.% and most preferably not more than 3.5 wt.%, with the preferred amount of master batch being from 1.5 to 3.5 wt.%, based on the total amount of the polypropylene composition. Most preferably the masterbatch (MB) comprises, preferably consists of a homopolymer or copolymer, preferably homopolymer, of propylene which has been nucleated according to BNT-technology as described below.

It is preferred that the nucleating agent is introduced to the polypropylene composition during the polymerization process of the heterophasic propylene copolymer (HECO). The nucleating agent is preferably introduced to the heterophasic propylene copolymer (HECO) by first polymerizing the above defined vinyl compound, preferably vinylcycloalkane, as defined above or below, in the presence of a catalyst system comprising a solid catalyst component, preferably a solid Ziegler Natta catalyst component, a cocatalyst and optional external donor, and the obtained reaction mixture of the polymer of the vinyl compound, preferably vinyl cyclohexane (VCH) polymer, and the catalyst system is then used for producing the heterophasic propylene copolymer (HECO). The above incorporation of the polymeric nucleating agent to the heterophasic propylene copolymer (HECO) during the polymerization of said heterophasic propylene copolymer (HECO) is called herein as BNT-technology as described below.

Said obtained reaction mixture is herein below referred interchangeably as modified catalyst system.

Preferably the vinylcycloalkane is vinylcyclohexane (VCH) polymer which is introduced into the propylene copolymer by the BNT technology.

More preferably in this preferred embodiment, the amount of vinylcycloalkane, like vinylcyclohexane (VCH), polymer and/or vinylalkane polymer, more preferably of vinylcyclohexane (VCH) polymer, in the polypropylene composition is not more than 500 ppm, more preferably of 1 to 200 ppm, most preferably 5 to 100 ppm.

With regard to the BNT-technology reference is made to the international applications WO 99/24478, WO 99/24479 and particularly WO 00/68315. According to this technology a catalyst system, preferably a Ziegler-Natta procatalyst, can be modified by polymerising a vinyl compound in the presence of the catalyst system, comprising in particular the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the propylene copolymer according to this invention. The polymerized vinyl compound acts as an alpha-nucleating agent. The weight ratio of vinyl compound to solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

In case a nucleating agent is introduced to the polypropylene composition during the polymerization process of the heterophasic propylene copolymer (HECO) the nucleating agent (b) is part of the heterophasic propylene copolymer (HECO).

The heterophasic propylene copolymer (HECO) comprised in the composition according to this invention is preferably produced in a sequential polymerization process in the presence of a Ziegler-Natta catalyst, more preferably in the presence of a catalyst (system) as defined below.

Preferably the heterophasic propylene copolymer (HECO) is reactor made, preferably has been produced in a sequential polymerization process, wherein the polypropylene (PP) has been produced in at least one reactor, preferably in two reactors, and subsequently the elastomeric ethylene-propylene copolymer (EC) has been produced in at least two further reactors, preferably in two further reactors, wherein the first elastomeric ethylene-propylene copolymer fraction (EC1) has been produced in one of the two further reactors and the second elastomeric ethylene-propylene copolymer fraction (EC2) has been produced in the other one of the two further reactors. It is especially preferred that first the first elastomeric ethylene-propylene copolymer fraction (EC1) is produced and subsequently the second elastomeric ethylene-propylene copolymer fraction (EC2).

The term "polymerization reactor" shall indicate that the main polymerization takes place. Thus in case the process consists of two polymerization reactors, this definition does not exclude the option that the overall process comprises for instance a pre-polymerization step in a pre-polymerization reactor. The term "consist of" is only a closing formulation in view of the main polymerization reactors, i.e. does not exclude prepolymerisation reactors.

Preferably, said process comprises the steps of

(a1) polymerizing propylene and optionally ethylene and/or at least one $C_4$ to $C_{12}$ alpha-olefin in a first reactor (R1) obtaining the first polypropylene fraction (PP1), preferably said first polypropylene fraction (PP1) is a first propylene homopolymer fraction (H-PP1),

(b1) transferring the first polypropylene fraction (PP1) in a second reactor (R2),

(c1) polymerizing in the second reactor (R2) and in the presence of said first polypropylene fraction (PP1) propylene and optionally ethylene and/or a C4 to $C_{12}$ alpha-olefin obtaining thereby the second polypropylene fraction (PP2), preferably said second polypropylene fraction (PP2) is a second propylene homopolymer fraction (H-PP2), the first polypropylene fraction (PP1) together with the second polypropylene fraction (PP2) forms the polypropylene (PP),

(d1) transferring the polypropylene (PP) of step (c1) in a third reactor (R3),

(e1) polymerizing in the third reactor (R3) and in the presence of the polypropylene (PP) obtained in step (c1) propylene and ethylene and, optionally, a $C_4$ to $C_{12}$ alpha-olefin obtaining thereby the first elastomeric ethylene-propylene copolymer fraction (EC1), said polypropylene (PP) and said first elastomeric ethylene-propylene copolymer fraction (EC1) form a mixture (M1),

(f1) transferring said mixture (M1) in a fourth reactor (R4), and

(g1) polymerizing in the fourth reactor (R4) and in the presence of the mixture (M1) propylene and ethylene and, optionally, a $C_4$ to $C_{12}$ alpha-olefin obtaining thereby the second elastomeric ethylene-propylene copolymer fraction (EC2), the mixture (M1) and the second elastomeric ethylene-propylene copolymer fraction (EC2) form the heterophasic propylene copolymer (HECO).

Per definition the xylene cold soluble (XCS) of said mixture (M1) is regarded as the first elastomeric ethylene-propylene copolymer fraction (EC1).

Preferably, in step (e1) and (g1) only propylene and ethylene are polymerized. Thus a $C_4$ to $C_{12}$ alpha-olefin is preferably not present in steps (e1) and (g1).

For preferred embodiments of the heterophasic propylene copolymer (HECO), the polypropylene (PP), the first polypropylene (PP1), the second polypropylene (PP2), first elastomeric ethylene-propylene copolymer fraction (EC1), as well as for the second elastomeric ethylene-propylene copolymer fraction (EC2) reference is made to the definitions given above.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer.

According to the present invention the slurry reactor (SR) is preferably a (bulk) loop reactor (LR).

The second reactor (R2), the third reactor (R3) and the fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like loop reactor (LR), whereas the second reactor (R2), the third reactor (R3) and the fourth reactor (R4) are gas phase reactors (GPR). Accordingly for the instant process at least four, preferably four polymerization reactors, namely a slurry reactor (SR), like loop reactor (LR), a first gas phase reactor (GPR-1), a second gas phase reactor (GPR-2) and a third gas phase reactor (GPR-3) connected in series are used. If needed prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell described e.g.in figure 20 of the paper by Galli and Vecello, Prog.Polym.Sci. 26 (2001) 1287-1336.

Preferably, in the instant process for producing the propylene copolymer (matrix (M)) as defined above the conditions for the first reactor (R1), i.e. the slurry reactor (SR), like a loop reactor (LR), of step (a1) may be as follows:

- the temperature is within the range of 40 °C to 110 °C, preferably between 60 °C and 100 °C, like 68 to 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a1) containing preferably the first propylene copolymer fraction (PP1) is transferred to the second reactor (R2), i.e. the first gas phase reactor (GPR-1), whereby the conditions are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

If desired, the polymerization may be effected in a known manner under supercritical conditions in the first reactor (R1), i.e. in the slurry reactor (SR), like in the loop reactor (LR), and/or as a condensed mode in the gas phase reactor (GPR-1).

The gas phase reactors (GPR-2) and (GPR-3) of steps (e1) and (g1) are preferably also operated within the above conditions, preferably with the exception that in gas phase reactors (GPR-2) and (GPR-3)

- the pressure is within the range of 5 bar to 50 bar, preferably between 10 bar to 30 bar.

The residence time can vary in the above different reactors.

In one embodiment of the process for producing the propylene copolymer the residence time the first reactor (R1), i.e. the slurry reactor (SR), like a loop reactor (LR), is in the range 0.2 to 4 hours, e.g. 0.3 to 1.5 hours and the residence time in the gas phase reactors (GPR1 to GPR3) will generally be 0.2 to 6.0 hours, like 0.5 to 4.0 hours:

In the process of the invention a well-known prepolymerization step may precede before the actual polymerization in the reactors (R1) to (R4). The prepolymerisation step is typically conducted at a temperature of 0 to 50 °C, preferably from 10 to 45 °C, and more preferably from 15 to 40 °C.

More preferably the propylene copolymer is obtained in the presence of

(I) a solid catalyst component comprising a magnesium halide, a titanium halide and an internal electron donor; and
(II) a cocatalyst comprising an aluminium alkyl and optionally an external electron donor, and
(III) an optional nucleating agent, preferably in the presence of a nucleating agent as defined above or below;

and in a sequential polymerization process as defined in the present invention.

It is especially preferred that the process according to the present invention includes the following process steps: polymerizing a vinyl compound as defined above, preferably vinyl cyclohexane (VCH), in the presence of a catalyst system comprising the solid catalyst component to obtain a modified catalyst system which is the reaction mixture comprising the solid catalyst system and the produced polymer of the vinyl compound, preferably, and wherein, the weight ratio (g) of the polymer of the vinyl compound to the solid catalyst system is up to 5 (5:1), preferably up to 3 (3:1) most preferably is from 0.5 (1:2) to 2 (2:1), and the obtained modified catalyst system is fed to polymerization step (a1) of the process for producing the heterophasic propylene copolymer (HECO).

The used catalyst is preferably a Ziegler-Natta catalyst system and even more preferred a modified Ziegler Natta catalyst system as defined in more detail below.

Such a Ziegler-Natta catalyst system typically comprises a solid catalyst component, preferably a solid transition metal component, and a cocatalyst, and optionally an external donor. The solid catalyst component comprises most preferably a magnesium halide, a titanium halide and an internal electron donor. Such catalysts are well known in the art. Examples of such solid catalyst components are disclosed, among others, in WO 87/07620, WO 92/21705, WO 93/11165, WO 93/11166, WO 93/19100, WO 97/36939, WO 98/12234, WO 99/33842.

Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4,347,160, US 4,382,019, US 4,435,550, US 4,465,782, US 4,473,660, US 4,530,912 and US 4,560,671.

Moreover, said solid catalyst components are preferably used in combination with well known external electron donors, including without limiting to, ethers, ketones, amines, alcohols, phenols, phosphines and silanes, for example organosilane compounds containing Si-OCOR, Si-OR, or $Si-NR_2$ bonds, having silicon as the central atom, and R is an alkyl, alkenyl, aryl, arylalkyl or cycloalkyl with 1-20 carbon atoms; and well known cocatalysts, which preferably comprise an aluminium alkyl compound as known in the art, to polymerise the propylene copolymer.

When a nucleating agent is introduced to the heterophasic propylene copolymer (HECO) during the polymerisation process of the propylene copolymer, the amount of nucleating agent present in the heterophasic propylene copolymer (HECO) is preferably not more than 500 ppm, more preferably is 0.025 to 200 ppm, still more preferably is 1 to 100 ppm, and most preferably is 5 to 100 ppm, based on the heterophasic propylene copolymer (HECO) and the nucleating agent, preferably based on the total weight of the heterophasic propylene copolymer (HECO) including all additives.

The present invention is also directed to an injection-molded article comprising the polypropylene composition according to the invention, preferably the article is an injection-molded article selected from

- a juvenile care article, such as a car seat, a stroller or a baby walker, or
- a toy; or
- heavy duty pails; or
- transport packaging, such as pallets and crates.

Preferably the article, especially as defined in the previous paragraph, comprises based on the total amount of the article at least 50 wt.-%, like 50 to 99.9 wt.-%, more preferably at least 60 wt.-%, like 60 to 99 wt.-%, still more preferably at least 80 wt.-%, like 80 to 99 wt.-%, yet more preferably at least 90 wt.-%, like 90 to 99 wt.-%, still yet more preferably consists, of the polypropylene composition.

In the following the present invention is further illustrated by means of examples.

## EXAMPLES

### Measuring methods

The following definitions of terms and determination methods apply for the above general description of the invention as well as to the below examples unless otherwise defined.

### Quantification of copolymer microstructure by NMR spectroscopy

Quantitative nuclear-magnetic resonance (NMR) spectroscopy was used to quantify the comonomer content of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of 1,2-tetrachloroethane-d$_2$ (TCE-d$_2$) along with chromium-(III)-acetylacetonate (Cr(acac)$_3$) resulting in a 65 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ 16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer.

The comonomer fraction was quantified using the method of W-J. Wang and S. Zhu, Macromolecules 2000, 33 1157 , through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

The mole percent comonomer incorporation was calculated from the mole fraction.

The weight percent comonomer incorporation was calculated from the mole fraction.

**Calculation** of comonomer content of the second elastomeric ethylene-propylene copolymer fraction (EC2) (herein calculated for the second elastomeric ethylene-propylene copolymer fraction (EC2), but the formula can be applied for the other fractions as well):

wherein

w(PP1)    is the weight fraction [in wt.-%] of the first elastomeric ethylene-propylene copolymer fraction (EC1), e.g. the xylene cold soluble (XCS) fraction after the third reactor (e.g. comprising the matrix (M) and the first elastomeric fraction);

w(PP2)    is the weight fraction [in wt.-%] of the second elastomeric ethylene-propylene copolymer fraction (EC2), e.g. of the amount of xylene cold soluble fraction (XCS) produced in the fourth reactor (e.g. the second elastomeric fraction produced in the fourth reactor);

C(PP1)    is the comonomer content [in mol-%] of the first elastomeric ethylene-propylene copolymer fraction (EC1), e.g. of the xylene cold soluble (XCS) fraction after the third reactor (e.g. comprising the matrix (M) and the first elastomeric fraction);

C(PP)    is the comonomer content [in mol-%] of the xylene soluble fraction of the final heterophasic propylene copolymer (HECO),

C(PP2)    is the calculated comonomer content [in mol-%] of the second elastomeric ethylene-propylene copolymer fraction (EC2).

**MFR$_2$ (230 °C)** is measured according to ISO 1133 (230 °C, 2.16 kg load).

**The xylene soluble fraction (XCS) at room temperature (XS, wt.-%):** The amount of the polymer soluble in xylene is determined at 25 °C according to ISO 16152; first edition; 2005-07-01. The remaining part is the xylene cold insoluble (XCU) fraction.

**The intrinsic viscosity (IV)** is measured according to ISO 1628-1 (at 135 °C in decaline). **Calculation** of intrinsic viscosity of the second elastomeric ethylene-propylene copolymer fraction (EC2) (herein calculated for the second elastomeric ethylene-propylene copolymer fraction (EC2), but the formula can be applied for the other fractions as well):
wherein

w(PP1)  is the weight fraction [in wt.-%] of the first elastomeric ethylene-propylene copolymer fraction (EC1), e.g. the xylene cold soluble (XCS) fraction after the third reactor (e.g. comprising the matrix (M) and the first elastomeric fraction);

w(PP2)  is the weight fraction [in wt.-%] of the second elastomeric ethylene-propylene copolymer fraction (EC2), e.g. of the amount of xylene cold soluble fraction (XCS) produced in the fourth reactor (e.g. the second elastomeric fraction produced in the fourth reactor);

IV(PP1)  is the intrinsic viscosity [in dl/g] of the first elastomeric ethylene-propylene copolymer fraction (EC1), e.g. of the xylene cold soluble (XCS) fraction after the third reactor (e.g. comprising the matrix (M) and the first elastomeric fraction);

IV(PP)  is the intrinsic viscosity [in dl/g] of the xylene soluble fraction of the final heterophasic propylene copolymer (HECO),

IV(PP2)  is the calculated intrinsic viscosity [in dl/g] of the second elastomeric ethylene-propylene copolymer fraction (EC2).

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization ($H_c$) are determined from the cooling step, while melting temperature and heat of fusion ($H_f$) are determined from the second heating step.

**Tensile test:** The tensile modulus, the tensile strain at break, the tensile strain at yield, the tensile strength and the tensile stress at break were measured at 23 °C according to ISO 527-1 (cross head speed 1 mm/min for tensile modulus, 50 mm/min for others) using injection moulded specimens moulded at 230 °C according to ISO 527-2(1B), produced according to EN ISO 1873-2 (dog 10 bone shape, 4 mm thickness).

**Charpy impact test:** The Charpy notched impact strength (NIS) was measured according to ISO 179 1eA at +23 °C and -20 °C, using injection-molded bar test specimens of 80x10x4 $mm^3$ prepared in accordance with ISO 1873-2:2007.

**Heat distortion temperature (HDT)** was determined according to ISO 75-2 Method B (Tensile bar EN ISO 1873-2, 0.45 MPa surface stress)

**Polymerization of the inventive and comparative heterophasic polypropylene polymers Inv.HECO1, Comp.HECO1 and Comp.HECO2**

The following three materials were produced the details are given in table 1 further below. The catalyst used in the polymerizations was a Ziegler-Natta catalyst from Borealis having Ti-content of 1.9 wt-% (as described in EP 591 224). Before the polymerization, the catalyst was prepolymerized with vinyl-cyclo-hexane (VCH) as described in EP 1 028 984 and EP 1 183 307. The ratio of VCH to catalyst of 1:1 was used in the preparation, thus the final Poly-VCH content in IE1 was less than 100 ppm.

In the first stage the catalyst described above was fed into prepolymerization reactor together with propylene and small amount of hydrogen (2.5 g/h) and ethylene (330 g/h). Triethylaluminium as a cocatalyst and dicyclopentyldimethoxysilane as a donor was used. The aluminium to donor ratio was 7.5 mol/mol and aluminium to titanium ratio was 300 mol/mol. Reactor was operated at a temperature of 30 °C and a pressure of 55 barg.

The subsequent polymerization has been effected under the following conditions.

**Table 1:**

|  |  | Comp.HECO1 | Comp.HECO2 | Inv.HECO1 |
|---|---|---|---|---|
| Ti wt.% in cat | [wt.%] | 1.80 | 1.80 | 1.80 |
| TEA[1)]/Ti | [mol/mol] | 969.25 | 1075.72 | 1402.43 |
| TEA[1)]/DON | [mol/mol] | 0.80 | 0.71 | 0.55 |
| **Loop reactor*** |  |  |  |  |
| Split | [wt.-%] | 39.2 | 39.5 | 39.6 |

(continued)

| | | Comp.HECO1 | Comp.HECO2 | Inv.HECO1 |
|---|---|---|---|---|
| $MFR_2$ | [g/10 min] | 24.8 | 21.0 | 22.9 |
| C2 content | [wt.-%] | 0 | 0 | 0 |
| XCS | [wt.%] | 0 | 1.9 | 1.7 |
| H2/C3 | [mol/kmol] | 8.301 | 8.291 | 8.442 |
| **1 Gas phase reactor**** | | | | |
| Split | [wt.-%] | 34.8 | 36.5 | 34.9 |
| $MFR_2$ | [g/10 min] | 25.7 | 27.7 | 27.7 |
| C2 content | [wt.-%] | 0 | 0 | 0 |
| XCS | [wt.%] | 0 | 1.6 | 2.0 |
| H2/C3 | [mol/kmol] | 89.572 | 100.084 | 89.188 |
| **2 Gas phase reactor***** | | | | |
| Split | [wt.-%] | 26.3 | 24.5 | 17.4 |
| C2 content | [wt.%] | 12 | 11.5 | 7.1 |
| XCS | [wt.%] | 26 | 24 | 18.6 |
| C2 of XCS | [mol.-%] | 47.9 | 47.5 | 39.5 |
| IV of XCS | [dl/g] | 3.25 | 3.44 | 4.19 |
| H2/C3 | [mol/kmol] | 49 | 39 | 15 |
| C2/C3 | [mol/kmol] | 553 | 522 | 417 |
| **3 Gas phase reactor****** | | | | |
| Split | [wt.-%] | 0 | 0 | 9.0 |
| $MFR_2$ | [g/10 min] | 0 | 0 | 4.9 |
| C2 content | [mol.-%] | 0 | 0 | 20.0 |
| XCS | [wt.-%] | 0 | 0 | 26.8 |
| C2 of XCS | [mol.-%] | 0 | 0 | 48.6 |
| IV of XCS | [dl/g] | 0 | 0 | 4.07 |
| H2/C3 | [mol/kmol] | 0 | 0 | 34.86 |
| C2/C3 | [mol/kmol] | 0 | 0 | 747.29 |
| [1] triethylaluminium <br> * = first polypropylene fraction (PP1)) <br> ** = final matrix (M) = polypropylene (PP)) <br> *** = reaction product of (polypropylene (PP) + first elastomeric ethylene-propylene copolymer fraction) (EC1) <br> **** = final heterophasic propylene copolymer (HECO) | | | | |

The Comp.HECOs 1 and 2 and the Inv.HECO1 obtained above were compounded with the compounds provided in table 2 below to produce the inventive polypropylene composition Inv. PP1 and Comp. PP1 and PP2:

- "Comp PP1" is a comparative composition comprising a heterophasic propylene copolymer (HECO1) which has been produced in 3 reactors and has a unimodal rubber; no talc has been added
- "Comp PP2" is a comparative composition comprising a heterophasic propylene copolymer (HECO2) which has also been produced in 3 reactors and has an unimodal rubber. Comp PP2 comprises 1.0 wt.-% talc,
- "Inv. PP1" is the inventive composition comprising a heterophasic propylene copolymer (HECO3) which has been produced in 4 reactors and which has a bimodal rubber in view of the comonomer content and intrinsic viscosity.

Inv. PP1 comprises 1.0 wt.-% talc.

**Table 2:** Inv. PP1 and Comp. PP1 and PP2

|  |  | Comp PP1 | Comp PP2 | Inv. PP1 |
|---|---|---|---|---|
| HECO1 | [wt.-%] | 99.55 |  |  |
| HECO2 | [wt.-%] |  | 98.55 |  |
| HECO3 | [wt.-%] |  |  | 98.55 |
| Irganox 1010 | [wt.-%] | 0.033 | 0.033 | 0.033 |
| Irgafos 168 | [wt.-%] | 0.065 | 0.065 | 0.065 |
| CaSt | [wt.-%] | 0.052 | 0.052 | 0.052 |
| GMS95 | [wt.-%] | 0.3 | 0.3 | 0.3 |
| Talc | [wt.-%] | 0 | 1.0 | 1.0 |
| GMS95 is glycerol mono stearate, 95 % purity)<br>Talc is magnesium silicate hydroxite ($Mg_3Si_{44}O_{10}(OH)_2$) | | | | |

**Results**

The properties of the materials is given in table 3 below

**Table 3:**

|  |  | Comp. PP1 | Comp. PP2 | Inv. PP1 |
|---|---|---|---|---|
| MFR | [g/10 min] | 7.0 | 8.2 | 4.3 |
| Tensile Modulus | [MPa] | 1112 | 1179 | 1070 |
| Tensile strain at break | [%] | 101 | 83.6 | 263.8 |
| Tensile strain at yield | [%] | 4.4 | 4.3 | 4.7 |
| Tensile strength | [MPa] | 20 | 21.6 | 18.7 |
| Tensile stress at break | [MPa] | 15.2 | 16.4 | 16.5 |
| HDT | [°C] | 83.7 | 86.9 | 83.0 |
| NIS at 23 °C | [kJ/m$^2$] | 39.5 | 28.5 | 59.6 |
| NIS at -20 °C | [kJ/m$^2$] | 7.74 | 7.54 | 11.7 |
| Inv. PP1 was further compared with commercial polypropylene grade references Ref1 to Ref10.<br>Inv. PP1 exhibits superior low temperature impact strength and very good room temperature impact as can be taken from tables 4a and 4b. | | | | |

**Table 4a:**

| Properties |  | Inv. PC1 | Ref1 | Ref2 | Ref3 | Ref4 | Ref5 |
|---|---|---|---|---|---|---|---|
| MFR | [g/10 min] | 4.7 | 2.1 | 2.0 | 3.1 | 4.3 | 1.6 |
| **Tensile properties** |  |  |  |  |  |  |  |
| Tensile modulus | [MPa] | 1070 | 1290 | 1310 | 1250 | 1200 | 1170 |
| Tensile stress at yield | [MPa] | 18.8 | 25.9 | 24.7 | 25.3 | 22.3 | 25.4 |
| Tensile strain at yield | [%] | 4.7 | 6.7 | 6.6 | 7.3 | 5.6 | 8.5 |

(continued)

| Impact properties | | | | | | | |
|---|---|---|---|---|---|---|---|
| NIS at 23°C | [kJ/m$^2$] | 59.6 | 51.8 | 70.3 | 23.5 | 60 | 49 |
| NIS at -20°C | [kJ/m$^2$] | 11.7 | 6.4 | 7.6 | 6.2 | 7.8 | 6.4 |
| Thermal properties | | | | | | | |
| HDT, 0.45 MPa | [°C] | 83 | 87 | 92 | 88 | 84 | 102 |
| Tm | [°C] | 166.7 | 163.7 | 165.3 | 163.8 | 164.4 | 163.1 |
| Tc | [°C] | 131 | 120 | 124.8 | 118.1 | 124.7 | 116.2 |

**Table 4b:**

| Properties | Unit | Inv. PP1 | Ref6 | Ref7 | Ref8 | Ref9 | Ref10 |
|---|---|---|---|---|---|---|---|
| MFR | [g/ 10 min] | 4.7 | 4.3 | 3.1 | 3.4 | 3.0 | 8.5 |
| **Tensile properties** | | | | | | | |
| Tensile modulus | [MPa] | 1070 | 1230 | 1190 | 1190 | 1250 | 1230 |
| Tensile stress at yield | [MPa] | 18.8 | 24.2 | 23.9 | 24.4 | 24.1 | 23.9 |
| Tensile strain at yield | [%] | 4.7 | 6.2 | 6.3 | 6.5 | 6.4 | 6 |
| **Impact properties** | | | | | | | |
| NIS at 23°C | [kJ/m$^2$] | 59.6 | 55.2 | 19.9 | 17.2 | 70.8 | 47.6 |
| NIS at -20°C | [kJ/m$^2$] | 11.7 | 6.9 | 6.4 | 5.9 | 7.6 | 6.1 |
| **Thermal properties** | | | | | | | |
| HDT, 0.45 MPa | [°C] | 83 | 101 | 78.3 | 81.5 | 87.9 | 84.1 |
| Tm | [°C] | 166.7 | 163.7 | 162.1 | 162.3 | 164.9 | 164.4 |
| Tc | [°C] | 131 | 123.6 | 114.8 | 115.2 | 126.1 | 126.5 |

**Conclusions in general for the polypropylene composition of the invention**

As to inventive polypropylene composition (Inv. PP1), superior impact strength at both room temperature and -20 °C was achieved by using a bimodal rubber (with respect to the ethylene content). Propylene rich rubber with high viscosity (IV of XCS) produced in the 1st rubber reactor provides excellent room temperature impact whereas higher ethylene content rubber with slightly lower IV of XCS in the 2nd rubber reactor contributes more to low temperature impact strength.

Moreover, an MFR of > 4 g/10 min allows for efficient processing.

**Claims**

1. A polypropylene composition comprising

   (a) at least 70 wt.-%, based on the total weight of the polypropylene composition, of a heterophasic propylene copolymer (HECO) comprising

   - a matrix (M) being a polypropylene (PP) and
   - an elastomeric ethylene-propylene copolymer (EC) dispersed in said matrix (M), said elastomeric ethylene-propylene copolymer (EC) comprises

   • a first elastomeric ethylene-propylene copolymer fraction (EC1) and

• a second elastomeric ethylene-propylene copolymer fraction (EC2), wherein the elastomeric ethylene-propylene copolymer (EC) is the xylene cold soluble fraction (XCS) of the heterophasic propylene copolymer (HECO),

wherein further

(a1) said heterophasic propylene copolymer (HECO) has a melt flow rate $MFR_2$ (230 °C) measured according to ISO 1133 in the range of 3.0 to 9.0 g/10min,

(a2) the elastomeric ethylene-propylene copolymer (EC) has an intrinsic viscosity (IV) measured according to ISO 1628-1 (at 135 °C in decaline) in the range of 2.80 to 4.80 dl/g and a comonomer content in the range of 38.0 to 58.0 mol.-%, wherein still further

(a3) the heterophasic propylene copolymer (HECO) fulfills the inequation (I)

$$\frac{C(EC1)}{C(EC)} < 1.0 \qquad \text{(I)}$$

wherein

C(EC1) is the ethylene content [in mol.-%] of the first elastomeric ethylene-propylene copolymer fraction (EC1); and

C(EC) is the ethylene content [in mol.-%] of the elastomeric ethylene-propylene copolymer (EC);

(b) at least 1 ppm of a nucleating agent, preferably a polymeric nucleating agent

(c) 0.5 to 2.0 wt.-%, based on the total weight of the polypropylene composition, of an inorganic filler, and

(d) 0.02 to 5.0 wt.-%, based on the total weight of the polypropylene composition, of further additives different to the inorganic filler and the nucleating agent and the elastomeric ethylene-propylene copolymer (EC) is the only xylene cold soluble fraction (XCS) present in the polypropylene composition.

2. The polypropylene composition according to claim 1, wherein the heterophasic propylene copolymer (HECO) fulfills the inequation (III)

$$\frac{IV(EC)}{IV(EC1)} < 1.00 \qquad \text{(III)}$$

wherein

IV(EC1) is the intrinsic viscosity (IV) measured according to ISO 1628-1 (at 135 °C in decaline) [in dl/g] of the first elastomeric ethylene-propylene copolymer fraction (EC 1); and

IV(EC) is the intrinsic viscosity (IV) measured according to ISO 1628-1 (at 135 °C in decaline) [in dl/g] of the elastomeric ethylene-propylene copolymer (EC).

3. The polypropylene composition according to claim 1 or 2, wherein the first elastomeric ethylene-propylene copolymer fraction (EC1) has

(a) a comonomer content in the range of 30.0 to 50.0 mol.-%;
and/or
(b) an intrinsic viscosity (IV) measured according to ISO 1628-1 (at 135 °C in decaline) of 3.00 to 5.00 dl/g.

4. The polypropylene composition according to any one of the preceding claims, wherein the elastomeric ethylene-propylene copolymer (EC) has

(a) a comonomer content in the range of 38.0 to 58.0 mol.-%;
and/or
(b) an intrinsic viscosity (IV) measured according to ISO 1628-1 (at 135 °C in decaline) 2.70 to 4.70 dl/g.

5. The polypropylene composition according to any one of the preceding claims, wherein

(a) the weight ratio of the polypropylene (PP) to the elastomeric ethylene-propylene copolymer (EC) [(PP)/(EC)] is in the range of 85/15 to 60/40;
and/or
(b) weight ratio of the first elastomeric ethylene-propylene copolymer fraction (EC1) to the second elastomeric ethylene-propylene copolymer fraction (EC2) [(EC1)/(EC2)] is in the range of 70/30 to 30/70.

6. The polypropylene composition according to any one of the preceding claims, wherein the polypropylene (PP)

   (a) is a propylene homopolymer (H-PP);
   and/or
   (b) has a melt flow rate $MFR_2$ (230 °C) measured according to ISO 1133 in the range of 15.0 to 35.0 g/10min.

7. The polypropylene composition according to any one of the preceding claims, wherein the heterophasic propylene copolymer (HECO) is reactor made, preferably has been produced in a sequential polymerization process, wherein the polypropylene (PP) has been produced in at least one reactor and subsequently the elastomeric ethylene-propylene copolymer (EC) has been produced in at least two further reactors, wherein the first elastomeric ethylene-propylene copolymer fraction (EC1) has been produced in one of the two further reactors and the second elastomeric ethylene-propylene copolymer fraction (EC2) has been produced in the other one of the two further reactors.

8. The polypropylene composition according to any one of the preceding claims, wherein the polypropylene composition has

   (a) a Charpy notched impact strength (NIS) measured according to ISO 179 1eA at +23 °C in the range of 40 to 70 kJ/m$^2$,
   and/or
   (b) a Charpy notched impact strength (NIS) was measured according to ISO 179 1eA at -20 °C of at least 6.0 kJ/m$^2$,
   and/or
   (c) a tensile modulus measured at 23 °C according to ISO 527-1 (cross head speed 1 mm/min) of at least 950 MPa.

9. The polypropylene composition according to any one of the preceding claims, wherein the polypropylene composition has

   (a) a melting temperature $T_m$ determined according to differential scanning calorimetry (DSC) according to ISO 11357 / part 3 /method C2 between 162 and 170°C;
   and/or
   (b) a crystallisation temperature $T_c$ determined according to differential scanning calorimetry (DSC) according to ISO 11357 / part 3 /method C2 between 128 and 135°C.

10. The polypropylene composition according to any one of the preceding claims, wherein the nucleating agent is a polymeric nucleating agent, preferably a polymeric alpha-nucleating agent.

11. Process for producing a heterophasic propylene copolymer (HECO) comprised in the composition according to any one of the preceding claims, wherein said heterophasic propylene copolymer (HECO) has been produced in a sequential polymerization process comprising at least three reactors, preferably in four reactors, wherein in the first reactor or in the first two reactors the polypropylene (PP) is produced and subsequently the elastomeric ethylene-propylene copolymer (EC) is produced in at least two further reactors, wherein the first elastomeric ethylene-propylene copolymer fraction (EC1) is produced in one of the two further reactors and the second elastomeric ethylene-propylene copolymer fraction (EC2) is produced in the other one of the two further reactors.

12. Process according to claim 11, wherein said process comprises the steps of

    (a1) polymerizing propylene and optionally ethylene and/or at least one $C_4$ to $C_{12}$ alpha-olefin in a first reactor (R1) obtaining the first polypropylene fraction (PP1), preferably said first polypropylene (PP1) is a first propylene homopolymer fraction (H-PP1),
    (b1) transferring the first polypropylene fraction (PP1) in a second reactor (R2),
    (c1) polymerizing in the second reactor (R2) and in the presence of said first polypropylene fraction (PP1) propylene and optionally ethylene and/or a C4 to $C_{12}$ alpha-olefin obtaining thereby the second polypropylene fraction (PP2), preferably said second polypropylene fraction (PP2) is a second propylene homopolymer fraction (H-PP2), the first polypropylene fraction (PP1) together with the second polypropylene fraction (PP2) forms the polypropylene (PP),

(d1) transferring the polypropylene (PP) of step (c1) in a third reactor (R3),

(e1) polymerizing in the third reactor (R3) and in the presence of the polypropylene (PP) obtained in step (c1) propylene and ethylene and, optionally, a $C_4$ to $C_{12}$ alpha-olefin obtaining thereby the first elastomeric ethylene-propylene copolymer fraction (EC1), said polypropylene (PP) and said first elastomeric ethylene-propylene copolymer fraction (EC1) form a mixture (M1),

(f1) transferring said mixture (M1) in a fourth reactor (R4), and

(g1) polymerizing in the fourth reactor (R4) and in the presence of the mixture (M1) propylene and ethylene and, optionally, a $C_4$ to $C_{12}$ alpha -olefin obtaining thereby the second elastomeric ethylene-propylene copolymer fraction (EC2), the mixture (M1) and the second elastomeric ethylene-propylene copolymer fraction (EC2) form the heterophasic propylene copolymer (HECO).

13. An injection-molded article comprising the polypropylene composition according to any one of the preceding claims 1 to 10.

14. The article according to claim 13 which is

- a juvenile care article, such as a car seat, a stroller or a baby walker, or
- a toy; or
- a heavy duty pail; or
- transport packaging, such as pallets and crates.

**Patentansprüche**

1. Polypropylen-Zusammensetzung, umfassend

(a) mindestens 70 Gew.-%, bezogen auf das Gesamtgewicht der Polypropylen-Zusammensetzung, eines heterophasischen Propylen-Copolymers (HE-CO), umfassend

- eine Matrix (M) aus einem Polypropylen (PP) und
- ein elastomeres Ethylen-Propylen-Copolymer (EC), das in der Matrix (M) dispergiert ist, wobei das elastomere Ethylen-Propylen-Copolymer (EC) umfasst

• eine erste elastomere Ethylen-Propylen-Copolymer-Fraktion (EC1) und
• eine zweite elastomere Ethylen-Propylen-Copolymer-Fraktion (EC2),

wobei das elastomere Ethylen-Propylen-Copolymer (EC) die in kaltem Xylol lösliche Fraktion (XCS) des heterophasischen Propylen-Copolymers (HECO) ist,
wobei weiterhin

(a1) das heterophasische Propylen-Copolymer (HECO) eine Schmelzefließrate $MFR_2$ (230°C), gemessen gemäß ISO 1133, im Bereich von 3,0 bis 9,0 g/10 min aufweist,
(a2) das elastomere Ethylen-Propylen-Copolymer (EC) eine Grenzviskosität (IV), gemessen gemäß ISO 1628-1 (bei 135°C in Dekalin), im Bereich von 2,80 bis 4,80 dl/g und einen Comonomer-Gehalt im Bereich von 38,0 bis 58,0 Mol-% aufweist, wobei noch weiterhin
(a3) das heterophasische Propylen-Copolymer (HECO) die Ungleichung (I) erfüllt

$$\frac{C(EC1)}{C(EC)} < 1,0 \qquad\qquad (\text{I})$$

worin

C(EC1) der Ethylen-Gehalt [in Mol-%] der ersten elastomeren Ethylen-Propylen-Copolymer-Fraktion (EC1) ist; und

C(EC) der Ethylen-Gehalt [in Mol-%] des elastomeren Ethylen-Propylen-Copolymers (EC) ist;

(b) mindestens 1 ppm eines Nukleierungsmittels, vorzugsweise eines polymeren Nukleierungsmittels
(c) 0,5 bis 2,0 Gew.-%, bezogen auf das Gesamtgewicht der Polypropylen-Zusammensetzung, eines anorganischen Füllstoffs, und
(d) 0,02 bis 5,0 Gew.-%, bezogen auf das Gesamtgewicht der Polypropylen-Zusammensetzung, weiterer Additive, die sich von dem anorganischen Füllstoff und dem Nukleierungsmittel unterscheiden
und das elastomere Ethylen-Propylen-Copolymer (EC) die einzige in kaltem Xylol lösliche Fraktion (XCS) ist, die in der Polypropylen-Zusammensetzung vorhanden ist.

2. Polypropylen-Zusammensetzung nach Anspruch 1, wobei das heterophasische Propylen-Copolymer (HECO) die Ungleichung (III) erfüllt

$$\frac{IV(EC)}{IV(EC1)} < 1,00 \qquad\qquad (III)$$

worin

IV(EC1) die Grenzviskosität (IV), gemessen gemäß ISO 1628-1 (bei 135°C in Dekalin) [in dl/g], der ersten elastomeren Ethylen-Propylen-Copolymer-Fraktion (EC1) ist; und
IV(EC) die Grenzviskosität (IV), gemessen gemäß ISO 1628-1 (bei 135°C in Dekalin) [in dl/g], des elastomeren Ethylen-Propylen-Copolymers (EC) ist.

3. Polypropylen-Zusammensetzung nach Anspruch 1 oder 2, wobei die erste elastomere Ethylen-Propylen-Copolymer-Fraktion (EC1) aufweist

(a) einen Comonomer-Gehalt im Bereich von 30,0 bis 50,0 Mol-%;
und/oder
(b) eine Grenzviskosität (IV), gemessen gemäß ISO 1628-1 (bei 135°C in Dekalin), von 3,00 bis 5,00 dl/g.

4. Polypropylen-Zusammensetzung nach einem der vorangehenden Ansprüche, wobei das elastomere Ethylen-Propylen-Copolymer (EC) aufweist

(a) einen Comonomer-Gehalt im Bereich von 38,0 bis 58,0 Mol-%;
und/oder
(b) eine Grenzviskosität (IV), gemessen gemäß ISO 1628-1 (bei 135°C in Dekalin) von 2,70 bis 4,70 dl/g.

5. Polypropylen-Zusammensetzung nach einem der vorangehenden Ansprüche, wobei

(a) das Gewichtsverhältnis von dem Polypropylen (PP) zu dem elastomeren Ethylen-Propylen-Copolymer (EC) [(PP)/(EC)] im Bereich von 85/15 bis 60/40 liegt;
und/oder
(b) das Gewichtsverhältnis der ersten elastomeren Ethylen-Propylen-Copolymer-Fraktion (EC1) zu der zweiten elastomeren Ethylen-Propylen-Copolymer-Fraktion (EC2) [(EC1) / (EC2)] im Bereich von 70/30 bis 30/70 liegt.

6. Polypropylen-Zusammensetzung nach einem der vorangehenden Ansprüche, wobei das Polypropylen (PP)

(a) ein Propylen-Homopolymer (H-PP) ist;
und/oder
(b) eine Schmelzefließrate MFR$_2$ (230°C), gemessen gemäß ISO 1133, im Bereich von 15,0 bis 35,0 g/10 min aufweist.

7. Polypropylen-Zusammensetzung nach einem der vorangehenden Ansprüche, wobei das heterophasische Propylen-Copolymer (HECO) in einem Reaktor hergestellt ist, vorzugsweise in einem sequentiellen Polymerisationsverfahren hergestellt wurde, wobei das Polypropylen (PP) in mindestens einem Reaktor hergestellt wurde und anschließend das elastomere Ethylen-Propylen-Copolymer (EC) in mindestens zwei weiteren Reaktoren hergestellt wurde, wobei die erste elastomere Ethylen-Propylen-Copolymer-Fraktion (EC1) in einem der zwei weiteren Reaktoren hergestellt wurde und die zweite elastomere Ethylen-Propylen-Copolymer-Fraktion (EC2) in dem anderen der zwei weiteren Reaktoren hergestellt wurde.

**8.** Polypropylen-Zusammensetzung nach einem der vorangehenden Ansprüche, wobei die Polypropylen-Zusammensetzung aufweist

(a) eine Kerbschlagzähigkeit nach Charpy (NIS), gemessen gemäß ISO 179 1eA bei +23°C, im Bereich von 40 bis 70 kJ/m$^2$,
und/oder
(b) eine Kerbschlagzähigkeit nach Charpy (NIS), die gemäß ISO 179 1 eA bei -20°C gemessen wurde, von mindestens 6, 0 kJ/m$^2$,
und/oder
(c) einen Zugmodul, gemessen bei 23°C gemäß ISO 527-1 (Kreuzkopfgeschwindigkeit 1 mm/min), von mindestens 950 MPa.

**9.** Polypropylen-Zusammensetzung nach einem der vorangehenden Ansprüche, wobei die Polypropylen-Zusammensetzung aufweist

(a) eine Schmelztemperatur $T_m$, bestimmt gemäß der dynamischen Differenz-Kalorimetrie (DSC) gemäß ISO 11357 / Teil 3 / Verfahren C2, zwischen 162 und 170°C;
und/oder
(b) eine Kristallisationstemperatur $T_c$, bestimmt gemäß der dynamischen Differenz-Kalorimetrie (DSC) gemäß ISO 11357 / Teil 3 / Verfahren C2, zwischen 128 und 135°C.

**10.** Polypropylen-Zusammensetzung nach einem der vorangehenden Ansprüche, wobei das Nukleierungsmittel ein polymeres Nukleierungsmittel, vorzugsweise ein polymeres alpha-Nukleierungsmittel, ist.

**11.** Verfahren zur Herstellung eines heterophasischen Propylen-Copolymers (HECO), das in der Zusammensetzung nach einem der vorangehenden Ansprüche enthalten ist, wobei das heterophasische Propylen-Copolymer (HECO) in einem sequentiellen Polymerisationsverfahren hergestellt wurde, das mindestens drei Reaktoren, vorzugsweise in vier Reaktoren, umfasst, wobei in dem ersten Reaktor oder in den ersten zwei Reaktoren das Polypropylen (PP) hergestellt wird und anschließend das elastomere Ethylen-Propylen-Copolymer (EC) in mindestens zwei weiteren Reaktoren hergestellt wird, wobei die erste elastomere Ethylen-Propylen-Copolymer-Fraktion (EC1) in einem der zwei weiteren Reaktoren hergestellt wird und die zweite elastomere Ethylen-Propylen-Copolymer-Fraktion (EC2) in dem anderen der zwei weiteren Reaktoren hergestellt wird.

**12.** Verfahren nach Anspruch 11, wobei das Verfahren die Schritte umfasst

(a1) Polymerisieren von Propylen und gegebenenfalls Ethylen und/oder mindestens einem $C_4$ bis $C_{12}$ alpha-Olefin in einem ersten Reaktor (R1), wobei die erste Polypropylen-Fraktion (PP1) erhalten wird, wobei das erste Polypropylen (PP1) vorzugsweise eine erste Propylen-Homopolymer-Fraktion (H-PP1) ist,
(b1) Überführung der ersten Polypropylen-Fraktion (PP1) in einen zweiten Reaktor (R2),
(c1) Polymerisation in dem zweiten Reaktor (R2) und in Gegenwart der ersten Polypropylen-Fraktion (PP1) von Propylen und gegebenenfalls Ethylen und/oder einem $C_4$- bis $C_{12}$ alpha-Olefin, wodurch die zweite Polypropylen-Fraktion (PP2) erhalten wird, wobei die zweite Polypropylen-Fraktion (PP2) vorzugsweise eine zweite Propylen-Homopolymer-Fraktion (H-PP2) ist, wobei die erste Polypropylen-Fraktion (PP1) zusammen mit der zweiten Polypropylen-Fraktion (PP2) das Polypropylen (PP) bildet,
(d1) Überführung des Polypropylens (PP) von Schritt (c1) in einen dritten Reaktor (R3),
(e1) Polymerisation in dem dritten Reaktor (R3) und in Gegenwart des in Schritt (c1) erhaltenen Polypropylens (PP) von Propylen und Ethylen und gegebenenfalls eines $C_4$- bis $C_{12}$ alpha-Olefins, wodurch die erste elastomere Ethylen-Propylen-Copolymer-Fraktion (EC1) erhalten wird, wobei das Polypropylen (PP) und die erste elastomere Ethylen-Propylen-Copolymer-Fraktion (EC1) ein Gemisch (M1) bilden,
(f1) Überführen des Gemisches (M1) in einen vierten Reaktor (R4), und
(g1) Polymerisation in dem vierten Reaktor (R4) und in Gegenwart des Gemisches (M1) von Propylen und Ethylen und gegebenenfalls eines $C_4$- bis $C_{12}$ alpha-Olefins, wodurch die zweite elastomere Ethylen-Propylen-Copolymer-Fraktion (EC2) erhalten wird, wobei das Gemisch (M1) und die zweite elastomere Ethylen-Propylen-Copolymer-Fraktion (EC2) das heterophasische Propylen-Copolymer (HECO) bilden.

13. Spritzgegossener Artikel, umfassend die Polypropylen-Zusammensetzung nach einem der vorangehenden Ansprüche 1 bis 10.

14. Artikel nach Anspruch 13, der

- ein Artikel für Kinder, wie z.B. ein Autositz, ein Kinderwagen oder eine Kinderlaufhilfe, oder
- ein Spielzeug; oder
- ein Wischeimer; oder
- Transportverpackungen, wie Paletten und Stiegen ist.

**Revendications**

1. Composition de polypropylène comprenant

(a) au moins 70 % en poids, basés sur le poids total de la composition de polypropylène, d'un copolymère de propylène hétérophasique (HECO) comprenant

- une matrice (M) qui est un polypropylène (PP) et
- un copolymère d'éthylène-propylène élastomère (EC) dispersé dans ladite matrice (M), ledit copolymère d'éthylène-propylène (EC) comprenant

• une première fraction de copolymère d'éthylène-propylène élastomère (EC1) et
• une deuxième fraction de copolymère d'éthylène-propylène élastomère (EC2),

dans laquelle le copolymère d'éthylène-propylène élastomère (EC) est la fraction soluble à froid dans le xylène (XCS) du copolymère de propylène hétérophasique (HECO),
dans laquelle en outre

(a1) ledit copolymère de propylène hétérophasique (HECO) a un indice de fluage $MFR_2$ (230°C), mesuré conformément à la norme ISO 1133, dans la plage de 3,0 à 9,0 g/10 min,
(a2) le copolymère d'éthylène-propylène élastomère (EC) a une viscosité intrinsèque (IV), mesurée conformément à la norme ISO 1628-1 (à 135°C dans la décaline), dans la plage de 2,80 à 4,80 dl/g et une teneur en comonomères dans la plage de 38,0 à 58,0 % en moles,
dans laquelle encore en outre
(a3) le copolymère de propylène hétérophasique (HECO) satisfait à l'inégalité (I)

$$\frac{C(EC1)}{C(EC)} < 1,0 \qquad\qquad (I)$$

dans laquelle

C(EC1) est la teneur en éthylène [en % en moles] de la première fraction de copolymère d'éthylène-propylène élastomère (EC1) ; et
C(EC) est la teneur en éthylène [en % en moles] du copolymère d'éthylène-propylène élastomère (EC) ;

(b) au moins 1 ppm d'un agent de nucléation, de préférence d'un agent de nucléation polymérique,
(c) 0,5 à 2,0 % en poids, basés sur le poids total de la composition de polypropylène, d'une charge inorganique, et
(d) 0,02 à 5,0 % en poids, basés sur le poids total de la composition de polypropylène, d'autres additifs différents de la charge inorganique et de l'agent de nucléation,
et le copolymère d'éthylène-propylène élastomère (EC) est la seule fraction soluble à froid dans le xylène (XCS) présente dans la composition de polypropylène.

2. Composition de polypropylène selon la revendication 1, dans laquelle le copolymère de propylène hétérophasique (HECO) satisfait à l'inégalité (III)

$$\frac{IV(EC)}{IV(EC1)} < 1,00 \qquad (III)$$

dans laquelle

IV(EC1) est la viscosité intrinsèque (IV), mesurée conformément à la norme ISO 1628-1 (à 135°C dans la décaline) [en dl/g], de la première fraction de copolymère d'éthylène-propylène élastomère (EC1) ; et
IV(EC) est la viscosité intrinsèque (IV), mesurée conformément à la norme ISO 1628-1 (à 135°C dans la décaline) [en dl/g], du copolymère d'éthylène-propylène élastomère (EC).

**3.** Composition de polypropylène selon la revendication 1 ou 2, dans laquelle la première fraction de copolymère d'éthylène-propylène élastomère (EC1) a

(a) une teneur en comonomères dans la plage de 30,0 à 50,0 % en moles ;
et/ou
(b) une viscosité intrinsèque (IV), mesurée conformément à la norme ISO 1628-1 (à 135°C dans la décaline), de 3,00 à 5,00 dl/g.

**4.** Composition de polypropylène selon l'une quelconque des revendications précédentes, dans laquelle le copolymère d'éthylène-propylène élastomère (EC) a

(a) une teneur en comonomères dans la plage de 38,0 à 58,0 % en moles ;
et/ou
(b) une viscosité intrinsèque (IV), mesurée conformément à la norme ISO 1628-1 (à 135°C dans la décaline), de 2,70 à 4,70 dl/g.

**5.** Composition de polypropylène selon l'une quelconque des revendications précédentes, dans laquelle

(a) le rapport en poids du polypropylène (PP) sur le copolymère d'éthylène-propylène élastomère (EC) [(PP)/(EC)] est dans la plage de 85/15 à 60/40 ;
et/ou
(b) le rapport en poids de la première fraction de copolymère d'éthylène-propylène élastomère (EC1) sur la deuxième fraction de copolymère d'éthylène-propylène élastomère (EC2) [(EC1)/(EC2)] est dans la plage de 70/30 à 30/70.

**6.** Composition de polypropylène selon l'une quelconque des revendications précédentes, dans laquelle le polypropylène (PP)

(a) est un homopolymère de propylène (H-PP) ;
et/ou
(b) a un indice de fluage $MFR_2$ (230°C), mesuré conformément à la norme ISO 1133, dans la plage de 15,0 à 35,0 g/10 min.

**7.** Composition de polypropylène selon l'une quelconque des revendications précédentes, dans laquelle le copolymère de propylène hétérophasique (HECO) est produit en réacteur, de préférence a été produit dans un procédé de polymérisation en séquence, dans laquelle le polypropylène (PP) a été produit dans au moins un réacteur et ensuite le copolymère d'éthylène-propylène élastomère (EC) a été produit dans au moins deux autres réacteurs, dans lequel la première fraction de copolymère d'éthylène-propylène élastomère (EC1) a été produite dans l'un des deux autres réacteurs et la deuxième fraction de copolymère d'éthylène-propylène élastomère (EC2) a été produite dans l'autre des deux autres réacteurs.

**8.** Composition de polypropylène selon l'une quelconque des revendications précédentes, dans laquelle la composition de polypropylène a

(a) une résistance au choc Charpy sur barreau entaillé (NIS), mesurée conformément à la norme ISO 179 1eA à +23°C, dans la plage de 40 à 70 kJ/m$^2$,
et/ou
(b) une résistance au choc Charpy sur barreau entaillé (NIS), mesurée conformément à la norme ISO 179 1eA à -20°C, d'au moins 6,0 kJ/m$^2$,
et/ou
(c) un module de traction, mesuré à 23°C conformément à la norme ISO 527-1 (vitesse de tête d'équerre 1 mm/min), d'au moins 950 MPa.

9. Composition de polypropylène selon l'une quelconque des revendications précédentes, dans laquelle la composition de polypropylène a

(a) un point de fusion $T_m$, déterminé par calorimétrie à balayage différentiel (DSC) conformément à la norme ISO 11357 / partie 3 / méthode C2, entre 162 et 170°C ;
et/ou
(b) une température de cristallisation $T_c$, déterminée par calorimétrie à balayage différentiel (DSC) conformément à la norme ISO 11357 / partie 3 / méthode C2, entre 128 et 135°C.

10. Composition de polypropylène selon l'une quelconque des revendications précédentes, dans laquelle l'agent de nucléation est un agent de nucléation polymérique, de préférence un agent d'alpha-nucléation polymérique.

11. Procédé pour produire un copolymère de propylène hétérophasique (HECO) compris dans la composition de l'une quelconque des revendications précédentes, dans lequel ledit copolymère de propylène hétérophasique (HECO) a été produit dans un procédé de polymérisation en séquence comprenant au moins trois réacteurs, de préférence dans quatre réacteurs, dans lequel, dans le premier réacteur ou dans les deux premiers réacteurs, le polypropylène (PP) est produit et ensuite le copolymère d'éthylène-propylène élastomère (EC) est produit dans au moins deux autres réacteurs, dans lequel la première fraction de copolymère d'éthylène-propylène élastomère (EC1) est produite dans l'un des deux autres réacteurs et la deuxième fraction de copolymère d'éthylène-propylène élastomère (EC2) est produite dans l'autre des deux autres réacteurs.

12. Procédé selon la revendication 11, dans lequel ledit procédé comprend les étapes de

(a1) polymérisation de propylène et optionnellement d'éthylène et/ou d'au moins une alpha-oléfine en $C_4$ à $C_{12}$ dans un premier réacteur (R1), ce qui donne la première fraction de polypropylène (PP1), de préférence ledit premier polypropylène (PP1) est une première fraction d'homopolymère de propylène (H-PP1),
(b1) transfert de la première fraction de polypropylène (PP1) dans un deuxième réacteur (R2),
(c1) polymérisation, dans le deuxième réacteur (R2) et en présence de ladite première fraction de polypropylène (PP1), de propylène et optionnellement d'éthylène et/ou d'une alpha-oléfine en $C_4$ à $C_{12}$, ce qui donne ainsi la deuxième fraction de polypropylène (PP2), de préférence ladite deuxième fraction de polypropylène (PP2) est une deuxième fraction d'homopolymère de propylène (H-PP2), la première fraction de polypropylène (PP1) conjointement avec la deuxième fraction de polypropylène (PP2) forment le polypropylène (PP),
(d1) transfert du polypropylène (PP) de l'étape (c1) dans un troisième réacteur (R3),
(e1) polymérisation, dans le troisième réacteur (R3) et en présence du polypropylène (PP) obtenu dans l'étape (c1), de propylène et d'éthylène et, optionnellement, d'une alpha-oléfine en $C_4$ à $C_{12}$, ce qui donne ainsi la première fraction de copolymère d'éthylène-propylène élastomère (EC1), ledit polypropylène (PP) et ladite première fraction de copolymère d'éthylène-propylène élastomère (EC1) forment un mélange (M1),
(f1) transfert dudit mélange (M1) dans un quatrième réacteur (R4), et
(g1) polymérisation, dans le quatrième réacteur (R4) et en présence du mélange (M1), de propylène et d'éthylène et, optionnellement, d'une alpha-oléfine en $C_4$ à $C_{12}$, ce qui donne ainsi la deuxième fraction de copolymère d'éthylène-propylène élastomère (EC2), le mélange (M1) et la deuxième fraction de copolymère d'éthylène-propylène élastomère (EC2) forment le copolymère de propylène hétérophasique (HECO).

13. Article moulé par injection comprenant la composition de polypropylène de l'une quelconque des revendications 1 à 10.

14. Article selon la revendication 13, qui est

- un article de protection des enfants, tels qu'un siège auto, une poussette ou un trotteur, ou

- un jouet ; ou
- un seau pour usage intensif ; ou
- un conditionnement de transport, tel que des palettes et des caisses.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9924478 A
- WO 9924479 A
- WO 0068315 A
- EP 0887379 A
- WO 9212182 A
- WO 2004000899 A
- WO 2004111095 A
- WO 8707620 A
- WO 9221705 A
- WO 9311165 A
- WO 9311166 A
- WO 9319100 A
- WO 9736939 A
- WO 9812234 A

- WO 9933842 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 591224 A
- EP 1028984 A
- EP 1183307 A

### Non-patent literature cited in the description

- Plastic Additives Handbook. Hans Zweifel, 2001
- **GALLI ; VECELLO.** *Prog.Polym.Sci.,* 2001, vol. 26, 1287-1336
- **G. SINGH ; A. KOTHARI ; V. GUPTA.** *olymer Testing,* 2009, vol. 28 (5), 475
- **Z. ZHOU ; R. KUEMMERLE ; X. QIU ; D. REDWINE ; R. CONG ; A. TAHA ; D. BAUGH ; B. WINNIFORD.** *J. Mag. Reson.,* 2007, vol. 187, 225

- **V. BUSICO ; P. CARBONNIERE ; R. CIPULLO ; C. PELLECCHIA ; J. SEVERN ; G. TALARICO.** *Macromol. Rapid Commun.,* 2007, vol. 28, 1128
- **L. RESCONI ; L. CAVALLO ; A. FAIT ; F. PIEMONTESI.** *Chem. Rev.,* 2000, vol. 100 (4), 1253
- **CHENG, H. N.** *Macromolecules,* 1984, vol. 17, 1950
- **W-J. WANG ; S. ZHU.** *Macromolecules,* 2000, vol. 33, 1157